# EUROPEAN PATENT SPECIFICATION

(11) **EP 2 932 194 B1**
(45) Date of publication and mention of the grant of the patent: **06.03.2019**
(21) Application number: 13815257.4
(22) Date of filing: 05.12.2013
(51) Int. Cl.: G01C 21/16, A01B 79/00, E02F 9/26, G05D 1/02, A01B 69/04

(54) **MULTI-IMU INS FOR VEHICLE CONTROL**
MULTI-IMU-INS ZUR FAHRZEUGSTEUERUNG
INS MULTI-IMU DESTINÉ À LA COMMANDE D'UN VÉHICULE

(30) Priority: 17.12.2012 US 201213716486
(43) Date of publication of application: 21.10.2015
(73) Proprietor: Trimble Inc., Sunnyvale, CA 94085 (US)
(72) Inventor: PEAKE, John W., Mountain View, California 94043 (US)
(74) Representative: Farrington, Graham
(86) International application number: PCT/US2013/073421
(87) International publication number: WO 2014/099403

(56) References cited:
- US-A1- 2007 159 385
- US-A1- 2009 069 987
- US-A1- 2009 204 281
- US-A1- 2012 174 445

## Description

### Technical Field

The disclosure is related to precision agricultural vehicle and heavy equipment control.

### Background

Precise positioning, based on global navigational satellite system (GNSS) receivers, has transformed farming and construction among other industries. Whether planting and spraying on a farm, or cutting, filling and grading a construction site, GNSS vehicle positioning improves accuracy while cutting time and cost.

Autopilots and vehicle control systems use GNSS-derived position to guide a vehicle control point. However, the control point is rarely coincident with the location of the vehicle's GNSS antenna. The antenna is often mounted relatively high, on top of an operator cab for instance, to give it a clear view of GNSS satellites. The control point, on the other hand, is typically a location that simplifies guidance system design. An example control point is the center of a tractor axle.

Precise estimates of position, velocity and attitude at the control point lead to better performance of feedback control systems. Just a centimeter or two error forces designers to reduce feedback gains and settle for lower control system performance.

In some situations a GNSS antenna and a vehicle control point are connected by a rigid body. In other words their relative position and relative orientation are constant; equivalently, there is a "rigid body relationship" between the two. When that is the case, the position and velocity of the control point can be estimated by using an inertial measurement unit (IMU) to estimate the attitude of the rigid body. (An IMU includes at least one accelerometer or rate gyroscope, normally three of each.) An inertial navigation system (INS) then combines GNSS position and velocity estimates for the antenna with IMU attitude estimates for the rigid body to estimate position, velocity and attitude at the control point.

The rigid body assumption behind such traditional INS solutions is not always valid however. GNSS antennas are not always connected to vehicle control points by such simple relationships. What are needed are systems to locate and orient a vehicle control point using GNSS-derived position and velocity when the spatial relationship between the GNSS antenna and the control point is not constant.

US 2012/174445 discloses a global navigation satellite sensor system (GNSS) and gyroscope control system for vehicle steering control comprising a GNSS receiver and antennas at a fixed spacing to determine a vehicle position, velocity and at least one of a heading angle, a pitch angle and a roll angle based on carrier phase position differences. The roll angle facilitates correction of the lateral motion induced position errors resultant from motion of the antennae as the vehicle moves based on an offset to ground and the roll angle. Alternative aspects include multiple-antenna GNSS guidance methods for high-dynamic roll compensation, real-time kinematic (RTK) using single-frequency (L1) receivers, fixed and moving baselines between antennas, multi-position GNSS tail guidance ("breadcrumb following") for crosstrack error correction, guiding multiple vehicles and pieces of equipment relative to each other, and snow grooming equipment and method applications.

### Summary of the invention

The present invention addresses the above-mentioned problems and/or disadvantages by providing a method according to claim 1 and a system according to claim 8.

Other refinements of the invention are set forth in the dependent claims.

### Brief Description of the Drawings

Fig. 1 is a rear view of a farm tractor with a suspended cab.
Fig. 2 is a side view of the farm tractor of Fig. 1.
Figs. 3A and 3B are stick models for side and front views of a vehicle.
Fig. 4A is a stick model of a vehicle; Fig. 4B is a block diagram of a multi-IMU INS.
Figs. 5A, 5B and 5C show a spray vehicle with a pivoting spray boom.
Figs. 6A and 6B show a combine harvester and grain cart.
Fig. 7 shows an excavator.

### Detailed Description

Multi-IMU INS for vehicle control allows GNSS-derived position and velocity to be measured at an antenna and applied to the estimation of position, velocity and attitude at a separate control point even when the spatial relationship between antenna and control point is not constant. This new capability reduces errors associated with assuming a rigid body relationship. In addition, multi-IMU INS extends vehicle guidance concepts to vehicle component control. Rather than merely estimating position, velocity and attitude at one control point, multi-IMU INS can provide such information for sub-assemblies such as spray booms, grain chutes, excavator buckets, etc.

Multi-IMU INS is described below with the aid of four examples. In each case, a vehicle is modeled as being composed of rigid bodies connected by joints. The combination of a GNSS receiver and an IMU on one rigid body of a vehicle is used to create a virtual GNSS receiver at a joint connecting to a second rigid body. Attitude and acceleration estimates from an IMU on the second rigid body are then combined with position and velocity estimates from the virtual GNSS receiver to estimate position, velocity and attitude anywhere within the second rigid body.

The examples considered are: (1) estimating position, velocity and attitude at a tractor control point when a GNSS antenna is mounted on the roof of a tractor suspended cab; (2) separating spray vehicle dynamics from a spray boom control system; (3) grain cart positioning for automated combine harvester unloading; and (4) excavator stick positioning. Clearly these are but a few cases in which multi-IMU INS can be applied to precision agricultural vehicle or heavy equipment control.

The cab of the state-of-the-art Fendt 900 Vario farm tractor is described by its manufacturer as an "executive corner office with lots of space." Indeed, with full climate control, a mini-fridge for beverages, multiple electronic displays and guest seating included, the analogy is not far off. The cab also features a three point suspension to reduce vibrations and provide maximum ride comfort. The entire cab moves with respect to the tractor's chassis. The suspension reduces operator fatigue and increases productivity; unfortunately, it also degrades the performance of conventional tractor autopilot systems. As described below, multi-IMU INS uses two IMUs to account for the relative motion of tractor cab and chassis thus supplying an autopilot with accurate control point position, velocity and attitude.

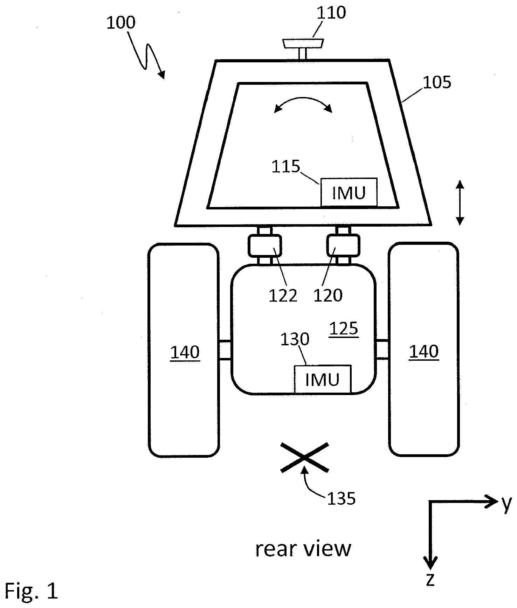

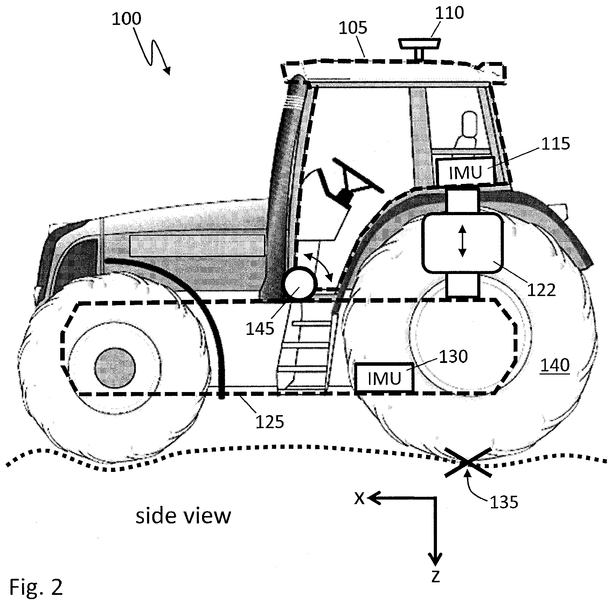

Fig. 1 is a rear view of a farm tractor 100 with a suspended cab 105. A GNSS antenna 110 is mounted on the cab. IMU 115 estimates the cab's acceleration and rotation rate. The cab is attached to tractor chassis 125 by shock absorbers 120, 122. IMU 130 estimates the chassis's acceleration and rotation rate. An "X" marks the tractor control point on the ground directly under the center of the tractor's rear axle. Tires 140 are assumed to be rigid enough so that there is a rigid-body relationship between IMU 130 and the control point. y and z axes are shown to help orient Fig. 1 in a right-hand x, y, z coordinate system also illustrated in Fig. 2.

Fig. 2 is a side view of the farm tractor of Fig. 1. In Fig. 2, heavy dashed lines help to show the outlines of cab 105 and chassis 125. Shock absorber 122 is illustrated in different proportion in Figs. 1 and 2, but the conceptual relationship between the shock absorbers and cab 105 and chassis 125 is the same in each case. Also illustrated in Fig. 2 is hinge 145. Hinge 145 allows the cab and chassis to pitch about the y-axis with respect to one another, but not to yaw about the z-axis. Thus hinge 145 is an example of a revolute joint connecting rigid body components of an agricultural vehicle or heavy machine. The overall motion between cab and chassis is constrained by it.

Revolute joints are simpler than spherical ball joints and therefore the relative motion between rigid bodies connected by them may be simpler than the relative motion between rigid bodies connected by spherical ball joints. Recognition of constraints, such as a no-yaw constraint between tractor cab and chassis, may lead to simplifications in multi-IMU INS design. In the examples that follow, however, no specific simplified joint is assumed.

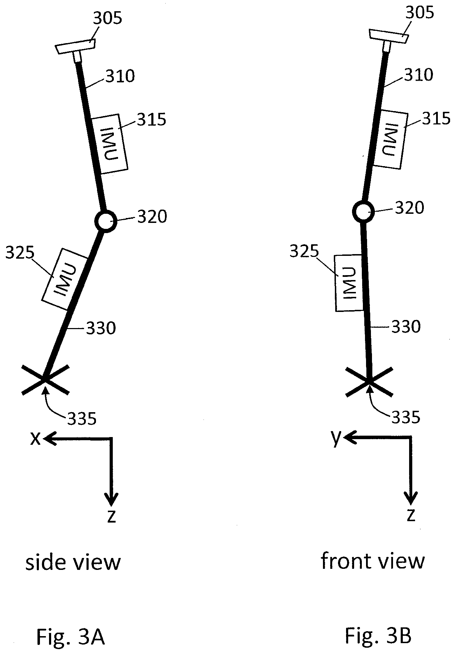

Figs. 3A and 3B are stick models for side and front views of a vehicle. In Figs. 3A and 3B GNSS antenna 305 is mounted on rigid body 310 which is connected to rigid body 330 by joint 320. Joint 320 may be a spherical ball joint, or a simpler, constrained joint. IMU 315 estimates the attitude and rotation rate of rigid body 310 while IMU 325 estimates the attitude and rotation rate of rigid body 330. Control point 335 is located on or within rigid body 330 or else has a rigid body relationship to it. Fig. 3A provides a side view and Fig. 3B provides a front view as indicated by the x, y, z axes.

Inspection of Figs. 1, 2 and 3 reveals that rigid body 310 is a model for tractor cab 105 and rigid body 330 is a model for tractor chassis 125. Of course the stick models of Figs. 3 are also applicable to a wide range of similar situations involving agricultural vehicles or heavy equipment.

If GNSS antenna 305 were mounted on rigid body 330, e.g. at joint 320, then the problem of estimating position, velocity and attitude at control point 335 would be the conventional one. It would be solved by combining GNSS information with attitude information from IMU 325 in an INS.

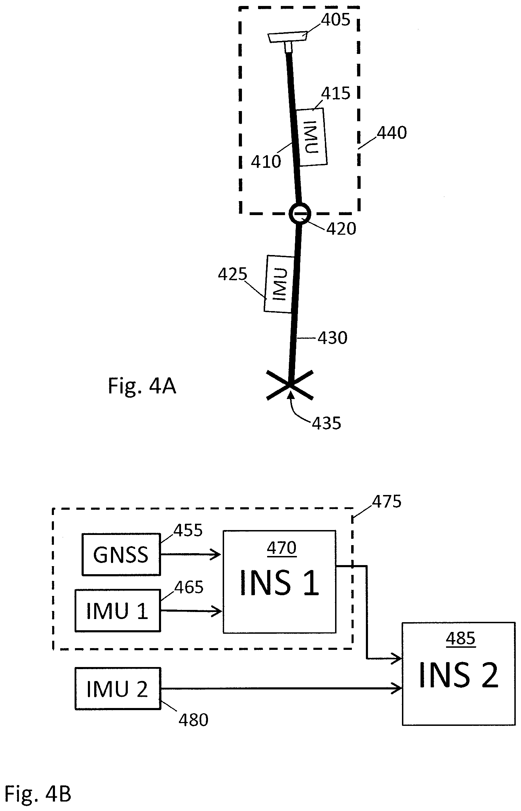

Here, however, GNSS 305 is separated from rigid body 330 by rigid body 310 and joint 320. Figs. 4 illustrate a strategy for creating a "virtual GNSS" mounted on rigid body 330 and thereby reducing the problem to the conventional one.

Fig. 4A is a stick model of a vehicle. In Fig. 4A (similar to Figs. 3) GNSS antenna 405 is mounted on rigid body 410 which is connected to rigid body 430 by joint 420. (No distinction is made herein between the position of a GNSS receiver and the position of its antenna.) Joint 420 may be a spherical ball joint, for example. IMU 415 estimates the attitude and rotation rate of rigid body 410 while IMU 425 estimates the attitude and rotation rate of rigid body 430. Control point 435 is located on or within rigid body 430 or else has a rigid body relationship to it. Said another way, the spatial relationship between the two is fixed.

Fig. 4B is a block diagram of a multi-IMU INS corresponding to the stick model of Fig. 4A. In Fig. 4B the outputs of GNSS receiver 455 and IMU 1 465 are combined in INS 1 470. The GNSS receiver, IMU 1 and INS 1 may be thought of as a virtual GNSS receiver 475 that provides position, velocity and attitude at joint 420. The outputs of virtual GNSS receiver 475 and IMU 2 480 are combined in INS 2 485 using conventional digital filtering techniques including, for example, Kalman filtering. INS 2 provides position, velocity and attitude at control point 435. (GNSS receiver 455 obtains signals from GNSS antenna 405 and IMU 1 465 corresponds to IMU 415. IMU 2 480 corresponds to IMU 425.)

The system of Fig. 4B is an example of a loosely coupled approach to INS meaning that INS 1 and INS 2 use GNSS code-based position and velocity fixes, rather than GNSS pseudoranges and Doppler corrections, in digital filters (e.g. Kalman filters) that estimate state vectors having roughly a dozen or so components. Tightly coupled INS is an alternative; however, state vectors in tightly coupled INS have upward of 50 or 60 components (e.g. satellite pseudoranges) which greatly increases system complexity. Deeply coupled INS, in which IMU output is used to aid GNSS tracking loops, is a third approach. Loosely coupled INS is adequate for the case of the suspended tractor cab, especially when practical relative motion constraints are considered.

The approach diagrammed in Fig. 4B may be applied to other vehicle control applications in agriculture and civil engineering. Examples involving spray boom control, a harvester unloading chute, and an excavator are given below. In each case multiple IMUs are used to define spatial relationships between parts of a machine that may each be modeled as rigid bodies. Multiple IMUs thereby allow GNSS-derived position and velocity estimates to be applied to components of a vehicle or machine that are not part of the same rigid body to which the GNSS antenna is mounted.

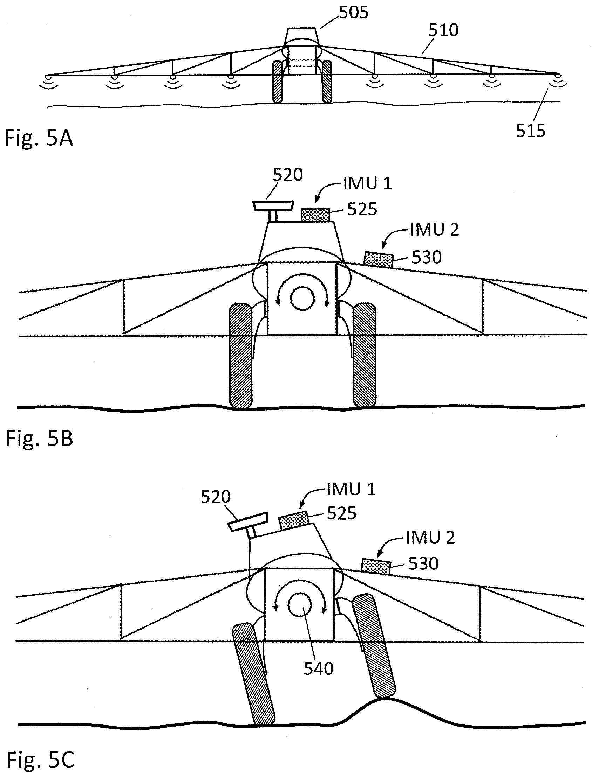

Figs. 5A, 5B and 5C show a spray vehicle with a pivoting spray boom. Fig. 5A illustrates spray vehicle 505 that carries spray boom 510 over a farm field. Sensors, such as 515, are used to detect the height of the boom over the field. Sensor 515 may be an ultrasonic ranging device, for example. Fig. 5B provides a closer look at the spray vehicle and spray boom of Fig. 5A. In this view, GNSS antenna 520, spray vehicle IMU 1 525, boom IMU 2 530 and boom pivot bearing 540 are visible. The boom pivot bearing may also be moved up and down by actuators mounted to the spray vehicle.

A spray boom control system tries to maintain constant boom height over a farm field. This task is complicated, however, by variable terrain. Fig. 5C shows an exaggerated example of the spray vehicle going over a bump. Ideally the spray boom does not change height or tilt when the spray vehicle goes over the bump. Put another way, a spray boom control system can operate more precisely if the motion of the spray boom can be decoupled from the motion of the tractor.

The problem is solved by providing a virtual GNSS receiver at the joint between rigid bodies; in this case, the pivot bearing that connects the spray vehicle and the spray boom. In the terminology of Fig. 4A, the spray vehicle is modeled by rigid body 410 and the spray boom is modeled by rigid body 430. In exact analogy with the discussion provided for Figs. 4A and 4B above, a virtual GNSS receiver is created at pivot bearing 540 by the combination of GNSS antenna 520 and IMU 1525. The output of this virtual GNSS receiver is then combined with the output of IMU 2 530 in an INS. A boom control system can then take advantage of GNSS position and velocity estimates for its control point which may be a point on the boom, for example.

The multi-IMU INS approach decouples the dynamics of a spray boom from those of the spray vehicle that carries it, thus simplifying the design, and improving the performance, of a spray boom control system.

Another application of multi-IMU INS for vehicle control is combine harvester automatic unloading. A combine harvester unloads grain through a chute into a cart driving alongside. Today this procedure relies on the skill and experience of the combine operator and the grain cart driver to keep the cart and combine in proper relative position while moving in a farm field. If the position and velocity of the grain chute's nozzle are known accurately, however, a grain cart autopilot can drive the cart to position it with respect to the chute.

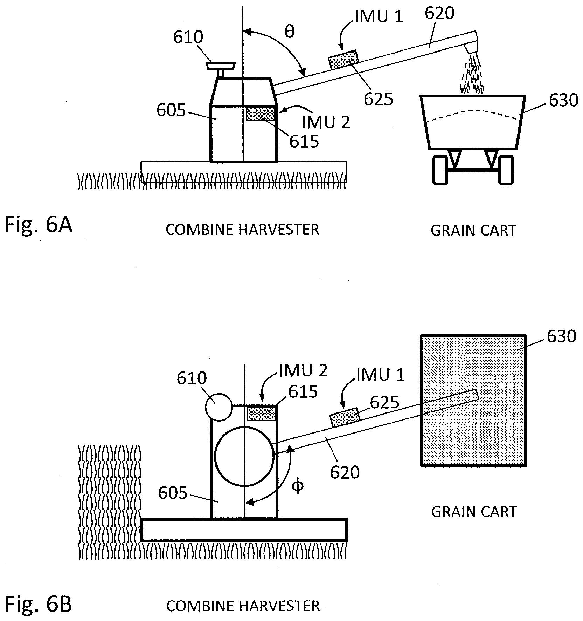

Figs. 6A and 6B show a combine harvester and grain cart in head-on and top view, respectively. In Figs. 6, combine harvester 605 unloads grain into cart 630. GNSS antenna 610 and IMU 2 615 are mounted on the combine harvester. IMU 1 625 is mounted on grain chute 620. The chute is connected to the harvester by a joint that permits motion characterized by polar angle θ and azimuth angle φ as shown in the figures.

The situation of Figs. 6 is directly analogous to the model of Fig. 4A. The combine harvester corresponds to rigid body 410 while the grain chute corresponds to rigid body 430. The nozzle from which grain is expelled from the chute corresponds to control point 435. GNSS position and velocity from antenna 610 may be combined with attitude and acceleration from IMU 2 615 in an INS to create a virtual GNSS receiver at the joint connecting the harvester and its grain chute. Position and velocity from this virtual GNSS may then be combined with attitude and acceleration from IMU 1 625 to obtain position, velocity and attitude at a control point having a rigid body relationship with the chute; e.g. the grain nozzle at the end of the chute.

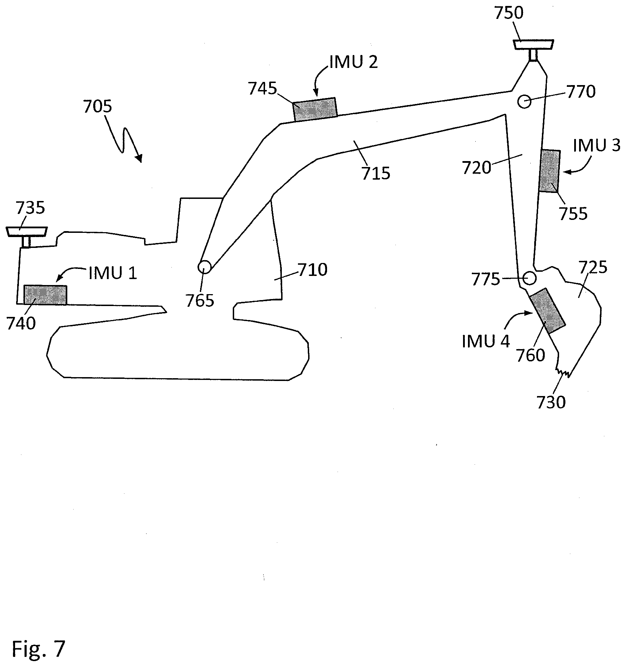

A fourth example of multi-IMU INS is excavator control. The chassis, boom, stick and bucket of an excavator form a chain of rigid bodies connected by joints. The excavator therefore fits the framework for carrying GNSS position and velocity from one rigid body to another that is described above. Fig. 7 shows excavator 705.

In Fig. 7, excavator chassis 710 is connected to boom 715 by joint 765. The boom is connected to stick 720 by joint 770. Stick 720 is connected to bucket 725 by joint 775. Teeth 730 are fixed on the bucket. GNSS antenna 735 and IMU 1 740 are mounted on the chassis. IMU 2 745 is mounted on the boom. GNSS antenna 750 and IMU 3 755 are mounted on the stick. Finally, IMU 4 760 is mounted on the bucket.

For purposes of discussion, the control point of the excavator is its teeth 730. GNSS derived position and velocity, and attitude of the teeth may be used as inputs to an excavator control system that digs precise holes automatically, for instance. One approach to obtaining GNSS position and velocity at the teeth is to use GNSS 750 and IMU 3 to create a virtual GNSS at joint 775. That virtual GNSS may then be combined with IMU 4 760. This approach corresponds exactly to the model of Figs. 4.

Alternatively, GNSS 735 and IMU 1 740 may be used to create a virtual GNSS at joint 765. That virtual GNSS may then be combined with IMU 2 745 to create a virtual GNSS at joint 770. From there, the same procedure may be repeated with IMU 3 755 and IMU 4 760 to estimate the position and velocity of the teeth.

As the length of a chain of rigid bodies connected by joints increases, errors in estimates of position and velocity transferred from one end of the chain to the other also increase. Thus estimating position and velocity of the teeth from information provided by chassis GNSS 735, as transferred using information from four IMUs, may result in unacceptable errors in practice. Among the factors that determine whether or not a long IMU chain provides acceptable performance are the technical specifications (e.g. biases and bias drift rates) of the IMUs. Additional practical considerations include the cost of GNSS receivers and IMUs having good enough performance specifications to provide a desired accuracy at the end of an IMU chain. Systems may also be constructed with more than one GNSS receiver, such as one that estimates teeth position and velocity taking into account information from both GNSS receivers and all four IMUs shown in Fig. 7.

Thus, multi-IMU INS for vehicle control allows GNSS-derived position and velocity to be measured at an antenna and applied to the estimation of position, velocity and attitude at a separate control point even when the spatial relationship between antenna and control point is not constant. Principles of multi-IMU INS have been described in terms of four examples. In each case, rigid bodies are connected by joints. GNSS derived position and velocity obtained at one rigid body may be used at another rigid body when the spatial relationship between rigid bodies is estimated by IMUs mounted on each one. Position, velocity and attitude estimates may be used by systems that provide automatic control not only for a vehicle as a whole, but also for rigid body components of the vehicle such as cabs, booms, chutes, sticks and buckets.

The above description of the disclosed embodiments is provided to enable any person skilled in the art to make or use the invention.

Broadly, this writing discloses Multi-IMU INS for vehicle control allowing GNSS-derived position and velocity to be measured at an antenna and applied to the estimation of position, velocity and attitude at a separate control point even when the spatial relationship between antenna and control point is not constant.

## Claims

1. A method comprising:
mounting a GNSS receiver (110; 405; 455; 520; 610; 735; 750) and a first IMU (115; 415; 465; 525; 615; 740; 755) on a first rigid body (105; 410; 505; 605; 710; 720);
mounting a second IMU (130; 425; 480; 530; 625; 745; 760) on a second rigid body (125; 430; 510; 620; 715; 725), the second rigid body (125; 430; 510; 620; 715; 725) being connected to the first rigid body (105; 410; 505; 605; 710; 720) by a joint (145; 420; 540; 765; 775);
combining position and velocity estimates from the GNSS receiver (110; 405; 455; 520; 610; 735; 750) with attitude rate and acceleration estimates from the first IMU (115; 415; 465; 615; 740; 755) in a first INS (470) to estimate position and velocity of a virtual GNSS receiver (475) located at the joint (145; 420; 540; 765; 775); and,
combining position and velocity estimates of said virtual GNSS receiver (475) at the joint (145; 420; 540; 765; 775) with attitude rate and acceleration estimates from the second IMU (130; 425; 480; 530; 625; 745; 760) in a second INS (485) to estimate position, velocity and attitude at a control point (135; 435; 515; 770; 730) having a fixed spatial relationship with the second rigid body (125; 430; 510; 605; 715; 725).

2. The method of Claim 1, the joint (420; 540; 765) being a hinge.

3. The method of Claim 1, the joint being a spherical ball joint (420).

4. The method of Claim 1 or 2, the first rigid body being a tractor cab (105) and the second rigid body being a tractor chassis (125).

5. The method of Claim 1, the first rigid body being an agricultural spray vehicle (505) and the second rigid body being a spray boom (510).

6. The method of Claim 1, the first rigid body (605) being a combine harvester and the second rigid body (620) being a grain unloading chute.

7. The method of Claim 1, the first rigid body being an excavator stick (720) and the second rigid body being an excavator bucket (725).

8. A system comprising:
a GNSS receiver (110; 405; 455; 520; 610; 735; 750) and a first IMU (115; 415; 465; 525; 615; 740; 755) mounted on a first rigid body (105; 410; 505; 605; 710; 720);
a second IMU (130; 425; 480; 530; 625; 745; 760) mounted on a second rigid body(125; 430; 510; 620; 715; 725), the second rigid body (125; 430; 510; 620; 715; 725) being connected to the first rigid body (105; 410; 505; 605; 710; 720) by a joint (145; 420; 540; 765; 775);
a first INS that estimates position and velocity of a virtual GNSS receiver (475) located at the joint (145; 420; 540; 765; 775) by combining position and velocity estimates from the GNSS receiver (110; 405; 455; 520; 610; 735; 750) with attitude rate and acceleration estimates from the first IMU (115; 415; 465; 525; 615; 740; 755); and,
a second INS that estimates position, velocity and attitude at a control point (135; 435; 515; 770; 730) having a fixed spatial relationship with the second rigid body (125; 430; 510; 620; 715; 725) by combining position and velocity estimates of said virtual GNSS receiver (475) at the joint (145; 420; 540; 765; 775) with attitude rate and acceleration estimates from the second IMU (130; 425; 480; 530; 625; 745; 760).

9. The system of Claim 8, the joint (420; 540; 765) being a hinge.

10. The system of Claim 8, the joint (420) being a spherical ball joint.

11. The system of Claim 8 or 9, the first rigid body being a tractor cab (105) and the second rigid body being a tractor chassis (125).

12. The system of Claim 8, the first rigid body being an agricultural spray vehicle (505) and the second rigid body being a spray boom (510).

13. The system of Claim 8, the first rigid body being a combine harvester (605) and the second rigid body being a grain unloading chute (620).

14. The system of Claim 8, the first rigid body being an excavator stick (720) and the second rigid body being an excavator bucket (725).

## Patentansprüche

1. Verfahren, das folgendes umfasst:
Montieren eines GNSS-Empfängers (110; 405; 455; 520; 610; 735; 750) und einer ersten IMU (115; 415; 465; 525; 615; 740; 755) an einem ersten steifen Körper (105; 410; 505; 605; 710; 720);
Montieren einer zweiten IMU (130; 425; 480; 530; 625; 745; 760) an einem zweiten steifen Körper (125; 430; 510; 620; 715; 725), wobei der zweite steife Körper (125; 430; 510; 620; 715; 725) durch ein Gelenk (145; 420; 540; 765; 775) mit dem ersten steifen Körper (105; 410; 505; 605; 710; 720) verbunden ist;
Kombinieren von Positions- und Geschwindigkeitsschätzwerten von dem GNSS-Empfänger (110; 405; 455; 520; 610; 735; 750) mit Schätzwerten der Einstellungsrate und der Beschleunigung von der ersten IMU (115; 415; 465; 525; 615; 740; 755) in einem ersten INS (470), um Position und Geschwindigkeit eines sich an dem Gelenk (145; 420; 540; 765; 775) befindenden virtuellen GNSS-Empfängers (475) zu schätzen; und
Kombinieren der Positions- und Geschwindigkeitsschätzwerte des virtuellen GNSS-Empfängers (475) an dem Gelenk (145; 420; 540; 765; 775) mit Schätzwerten der Einstellungsrate und der Beschleunigung von der zweiten IMU (130; 425; 480; 530; 625; 745; 760) in einem zweiten INS (485), um die Position, Geschwindigkeit und Lage an einem Kontrollpunkt (135; 435; 515; 770; 730) mit einem festen räumlichen Verhältnis zu dem zweiten steifen Körper (125; 430; 510; 620; 715; 725) zu schätzen.

2. Verfahren nach Anspruch 1, wobei es sich bei dem Gelenk (420; 540; 765) um ein Scharnier handelt.

3. Verfahren nach Anspruch 1, wobei es sich bei dem Gelenk um ein sphärisches Kugelgelenk (420) handelt.

4. Verfahren nach Anspruch 1 oder 2, wobei der steife Körper eine Traktorkabine (105) ist, und wobei der zweite steife Körper eine Traktorkarosserie (125) ist.

5. Verfahren nach Anspruch 1, wobei der erste steife Körper ein landwirtschaftliches Sprühfahrzeug (505) ist, und wobei der zweite steife Körper ein Sprühbalken (510) ist.

6. Verfahren nach Anspruch 1, wobei der erste steife Körper (605) eine kombinierte Erntemaschine ist, und wobei der zweite steife Körper (620) eine Getreideschüttrinne ist.

7. Verfahren nach Anspruch 1, wobei der erste steife Körper ein Baggerausleger (720) ist, und wobei der zweite steife Körper eine Baggerschaufel (725) ist.

8. System, das folgendes umfasst:
einen GNSS-Empfängers (110; 405; 455; 520; 610; 735; 750) und eine erste IMU (115; 415; 465; 525; 615; 740; 755), die an einem ersten steifen Körper (105; 410; 505; 605; 710; 720) montiert ist;
eine zweite IMU (130; 425; 480; 530; 625; 745; 760), die an einem zweiten steifen Körper (125; 430; 510; 620; 715; 725) montiert ist, wobei der zweite steife Körper (125; 430; 510; 620; 715; 725) durch ein Gelenk (145; 420; 540; 765; 775) mit dem ersten steifen Körper (105; 410; 505; 605; 710; 720) verbunden ist;
ein erstes INS, das die Position und Geschwindigkeit eines sich an dem Gelenk (145; 420; 540; 765; 775) befindenden virtuellen GNSS-Empfängers (475) schätzt, indem die Positions- und Geschwindigkeitsschätzwerte von dem GNSS-Empfänger (110; 405; 455; 520; 610; 735; 750) mit Schätzwerten der Einstellungsrate und der Beschleunigung von der ersten IMU (115; 415; 465; 525; 615; 740; 755) kombiniert werden; und
ein zweites INS, das die Position, Geschwindigkeit und Lage an einem Kontrollpunkt (135; 435; 515; 770; 730) mit einem festen räumlichen Verhältnis zu dem zweiten steifen Körper (125; 430; 510; 620; 715; 725) schätzt, indem die Positions- und Geschwindigkeitsschätzwerte des virtuellen GNSS-Empfängers (475) an dem Gelenk (145; 420; 540; 765; 775) mit Schätzwerten der Einstellungsrate und der Beschleunigung von der zweiten IMU (130; 425; 480; 530; 625; 745; 760) kombiniert werden.

9. System nach Anspruch 8, wobei es sich bei dem Gelenk (420; 540; 765) um ein Scharnier handelt.

10. System nach Anspruch 8, wobei es sich bei dem Gelenk um ein sphärisches Kugelgelenk (420) handelt.

11. System nach Anspruch 8 oder 9, wobei der steife Körper eine Traktorkabine (105) ist, und wobei der zweite steife Körper eine Traktorkarosserie (125) ist.

12. System nach Anspruch 8, wobei der erste steife Körper ein landwirtschaftliches Sprühfahrzeug (505) ist, und wobei der zweite steife Körper ein Sprühbalken (510) ist.

13. System nach Anspruch 8, wobei der erste steife Körper eine kombinierte Erntemaschine (605) ist, und wobei der zweite steife Körper eine Getreideschüttrinne (620) ist.

14. System nach Anspruch 8, wobei der erste steife Körper ein Baggerausleger (720) ist, und wobei der zweite steife Körper eine Baggerschaufel (725) ist.

## Revendications

1. Procédé comprenant les étapes consistant à :
monter un récepteur GNSS (110 ; 405 ; 455 ; 520 ; 610 ; 735 ; 750) et une première IMU (115 ; 415 ; 465 ; 525 ; 615 ; 740 ; 755) sur un premier corps rigide (105 ; 410 ; 505 ; 605 ; 710 ; 720) ;
monter une seconde IMU (130 ; 425 ; 480 ; 530 ; 625 ; 745 ; 760) sur un second corps rigide (125 ; 430 ; 510 ; 620 ; 715 ; 725), le second corps rigide (125 ; 430 ; 510 ; 620 ; 715 ; 725) étant relié au premier corps rigide (105 ; 410 ; 505 ; 605 ; 710 ; 720) par un raccord (145 ; 420 ; 540 ; 765 ; 775) ;
combiner les estimations de position et de vitesse provenant du récepteur GNSS (110 ; 405 ; 455 ; 520 ; 610 ; 735 ; 750) avec les estimations de variation d'assiette et d'accélération provenant de la première IMU (115 ; 415 ; 465 ; 615 ; 740 ; 755) dans un premier INS (470) pour estimer la position et la vitesse d'un récepteur GNSS (475) virtuel situé au niveau du raccord (145 ; 420 ; 540 ; 765 ; 775) ; et,
combiner les estimations de position et de vitesse dudit récepteur GNSS (475) virtuel au niveau du raccord (145 ; 420 ; 540 ; 765 ; 775) avec les estimations de variation d'assiette et d'accélération de la seconde IMU (130 ; 425 ; 480 ; 530 ; 625 ; 745 ; 760) dans un second INS (485) pour estimer la position, la vitesse et l'assiette au niveau d'un point de contrôle (135 ; 435 ; 515 ; 770 ; 730) ayant une relation spatiale fixe avec le second corps rigide (125 ; 430 ; 510 ; 605 ; 715 ; 725).

2. Procédé selon la revendication 1, le raccord (420 ; 540 ; 765) étant une charnière.

3. Procédé selon la revendication 1, le raccord étant un joint à rotule sphérique (420).

4. Procédé selon la revendication 1 ou 2, le premier corps rigide étant une cabine de tracteur (105) et le second corps rigide étant un châssis de tracteur (125).

5. Procédé selon la revendication 1, le premier corps rigide étant un véhicule de pulvérisation agricole (505) et le second corps rigide étant une rampe de pulvérisation (510).

6. Procédé selon la revendication 1, le premier corps rigide (605) étant une moissonneuse-batteuse et le second corps rigide (620) étant une goulotte de déchargement du grain.

7. Procédé selon la revendication 1, le premier corps rigide étant un bras excavateur (720) et le second corps rigide étant un godet excavateur (725).

8. Système, comprenant :
un récepteur GNSS (110 ; 405 ; 455 ; 520 ; 610 ; 735 ; 750) et une première IMU (115 ; 415 ; 465 ; 525 ; 615 ; 740 ; 755) montés sur un premier corps rigide (105 ; 410 ; 505 ; 605 ; 710 ; 720) ;
une seconde IMU (130 ; 425 ; 480 ; 530 ; 625 ; 745 ; 760) montée sur un second corps rigide (125 ; 430 ; 510 ; 620 ; 715 ; 725), le second corps rigide (125 ; 430 ; 510 ; 620 ; 715 ; 725) étant relié au premier corps rigide (105 ; 410 ; 505 ; 605 ; 710 ; 720) par un raccord (145 ; 420 ; 540 ; 765 ; 775) ;
un premier INS qui estime la position et la vitesse d'un récepteur GNS virtuel (475) situé au niveau du raccord (145 ; 420 ; 540 ; 765 ; 775) en combinant les estimations de position et de vitesse du récepteur GNSS (110 ; 405 ; 455 ; 520 ; 610 ; 735 ; 750) avec les estimations de variation d'assiette et d'accélération de la première IMU (115 ; 415 ; 465 ; 525 ; 615 ; 740 ; 755) ; et,
un second INS qui estime la position, la vitesse et l'assiette au niveau d'un point de contrôle (135 ; 435 ; 515 ; 770 ; 730) ayant une relation spatiale fixe avec le second corps rigide (125 ; 430 ; 510 ; 620 ; 715 ; 725) en combinant les estimations de position et de vitesse dudit récepteur GNSS virtuel (475) au niveau du raccord (145 ; 420 ; 540 ; 765 ; 775) avec les estimations de variation d'assiette et d'accélération de la seconde IMU (130 ; 425 ; 480 ; 530 ; 625 ; 745 ; 760).

9. Système selon la revendication 8, le raccord (420 ; 540 ; 765) étant une charnière.

10. Système selon la revendication 8, le raccord (420) étant un joint à rotule sphérique.

11. Système selon la revendication 8 ou 9, le premier corps rigide étant une cabine de tracteur (105) et le second corps rigide étant un châssis de tracteur (125).

12. Système selon la revendication 8, le premier corps rigide étant un véhicule de pulvérisation agricole (505) et le second corps rigide étant une rampe de pulvérisation (510).

13. Système selon la revendication 8, le premier corps rigide étant une moissonneuse-batteuse (605) et le second corps rigide étant une goulotte de déchargement du grain (620).

14. Système selon la revendication 8, le premier corps rigide étant un bras excavateur (720) et le second corps rigide étant un godet excavateur (725).
